# FASCICULE DE BREVET EUROPEEN

(11) **EP 4 237 671 B1**
(45) Date de publication et mention de la délivrance du brevet: **27.11.2024**
(21) Numéro de dépôt: 21810670.6
(22) Date de dépôt: 25.10.2021
(51) Int. Cl.: F02C 3/10, F01D 15/10, F02C 3/107, F02C 7/26, F02C 7/275

(54) **TURBOGÉNÉRATEUR À TURBINE LIBRE COMPRENANT UNE MACHINE ÉLECTRIQUE RÉVERSIBLE COUPLÉE À LA TURBINE LIBRE**
FREITURBINENTURBOGENERATOR MIT EINER REVERSIBLEN ELEKTRISCHEN MASCHINE, DIE AN DIE FREITURBINE GEKOPPELT IST
FREE TURBINE TURBOGENERATOR COMPRISING A REVERSIBLE ELECTRICAL MACHINE COUPLED TO THE FREE TURBINE

(30) Priorité: 29.10.2020 FR 2011079
(43) Date de publication de la demande: 06.09.2023
(73) Titulaire: Safran Helicopter Engines, 64510 Bordes (FR)
(72) Inventeur: VIVE, Loïs, Pierre, Denis, 77550 MOISSY-CRAMAYEL (FR); DROUIN, Thomas, 77550 MOISSY-CRAMAYEL (FR); BEDRINE, Olivier, 77550 MOISSY-CRAMAYEL (FR)
(74) Mandataire: Cabinet Beau de Loménie
(86) Numéro de dépôt international: PCT/FR2021/051875
(87) Numéro de publication internationale: WO 2022/090661

(56) Documents cités:
- FR-A1- 2 929 324
- FR-A1- 3 019 220
- FR-A1- 3 019 222
- FR-A1- 3 081 150
- US-A1- 2016 097 328

## Description

### Domaine Technique

La présente invention se rapporte au domaine général des turbomachines aéronautiques et plus particulièrement à la commutation entre un générateur de gaz et une turbine libre d'un turbogénérateur à turbine libre.

### Technique antérieure

Un turbomoteur à turbine libre pour hélicoptère comporte généralement un générateur de gaz et une turbine libre entraînée en rotation par le flux de gaz généré par le générateur de gaz, ainsi qu'une machine électrique réversible qui peut être couplée au générateur de gaz notamment pour mettre en rotation le générateur de gaz lors d'une phase de démarrage du turbomoteur.

Traditionnellement, le générateur de gaz comporte au moins un compresseur et une turbine couplés en rotation. Le principe de fonctionnement est le suivant : l'air frais entrant dans le turbomoteur est comprimé du fait de la rotation du compresseur avant d'être envoyé vers une chambre de combustion où il est mélangé à un carburant. Les gaz brûlés lors de la combustion sont ensuite évacués à grande vitesse.

Il se produit alors une première détente dans la turbine du générateur de gaz, durant laquelle cette dernière extrait l'énergie nécessaire à l'entraînement du compresseur. La turbine du générateur de gaz n'absorbe pas toute l'énergie cinétique des gaz brûlés et l'excédent d'énergie cinétique correspond au flux de gaz généré par le générateur de gaz. Ce dernier fournit donc de l'énergie cinétique à la turbine libre de sorte qu'il se produit une seconde détente dans la turbine libre qui transforme cette énergie cinétique en énergie mécanique afin d'entraîner un organe récepteur, telle rotor de l'hélicoptère.

Lors de la phase de démarrage du turbomoteur, il est nécessaire d'entraîner en rotation le générateur de gaz, c'est-à-dire entraîner en rotation le compresseur couplé à la turbine. Comme mentionné en préambule, c'est précisément l'un des rôles de la machine électrique réversible qui est le plus souvent un moteur électrique apte à fonctionner de manière réversible en génératrice électrique.

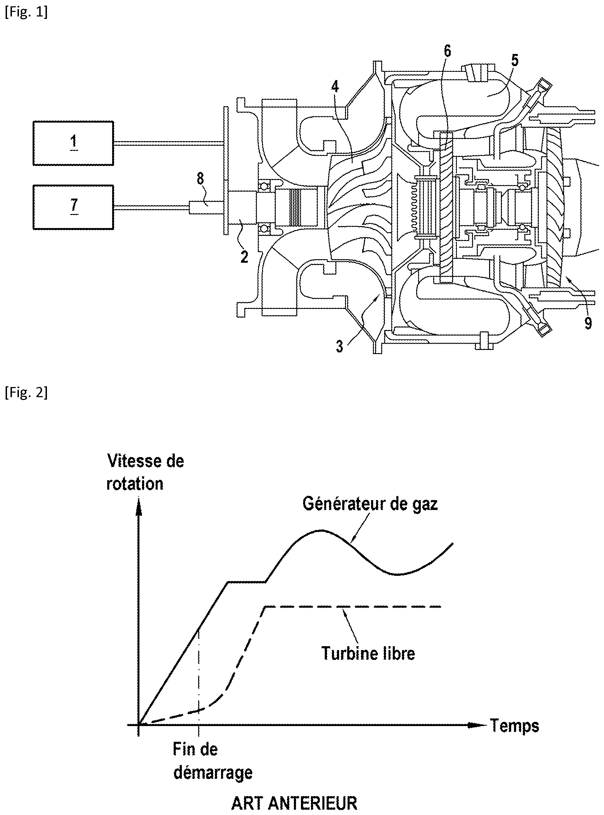

Comme cela est illustré sur la figure 1 qui présente schématiquement une turbomachine à turbine libre selon l'état de la technique, pour le démarrage, une machine électrique 1 dans un fonctionnement moteur entraîne l'arbre mécanique 2 du générateur de gaz 3, jusqu'à ce que la rotation de celui-ci soit entretenue par la combustion de carburant. L'arbre 8 de la turbine libre 9 étant mécaniquement découplé de l'arbre 2 du générateur de gaz, la machine électrique 1 n'entraîne pas l'arbre 8. La turbine libre 9 est alors entraînée uniquement par le flux gazeux sortant du générateur de gaz. L'entraînement en rotation du compresseur par la machine électrique 1 fonctionnant en moteur permet en effet de faire circuler de l'air dans le compresseur 4 et donc d'amener de l'air comprimé dans la chambre de combustion 5 afin d'initier la combustion. Cette combustion produit alors le flux gazeux permettant d'entraîner la turbine 6 de la turbine à gaz 3 en rotation, à la suite de quoi le compresseur 4 est directement entraîné en rotation par la turbine 6, ce qui signifie que le générateur de gaz 3 fonctionne de manière autonome, traduisant la fin de la phase de démarrage du turbomoteur.

En outre, pour un turbogénérateur à turbine libre comme celui illustré sur la figure 1, une seconde machine électrique 7 peut être prévue en prise sur l'arbre 8 de la turbine libre 9 pour permettre de répondre au besoin de génération forte puissance.

Il est connu que les aéronefs, dans lesquels de tels turbomoteurs sont notamment destinés à être intégrés, comportent de nombreux composants électriques qu'il est nécessaire d'alimenter par de l'énergie électrique. Par exemple, pour un aéronef à décollage et atterrissage vertical ayant une propulsion électrique, il est nécessaire d'alimenter en énergie électrique l'ensemble des rotors électriques qui l'équipent.

Sur une turbomachine comme illustré sur la figure 1, les équipements, ou accessoires, tels que la pompe à carburant, et la pompe à huile sont mécaniquement reliés à l'arbre 2 du générateur de gaz 3 via une boite d'accessoires.

Une fois la phase de démarrage terminée, il est connu d'utiliser la machine électrique 1 si celle-ci est réversible dans un mode de fonctionnement générateur pour produire de l'énergie électrique non propulsive (réseau 28V par exemple) pour fournir de l'électricité aux appareillages électriques. La machine électrique 1 génère de l'énergie électrique en prélevant de la puissance mécanique sur l'arbre 2 du générateur de gaz 3, l'énergie cinétique de rotation prélevée sur le générateur de gaz étant transformée en énergie électrique par ladite machine.

Cette machine électrique 1 peut être non réversible et constituée d'un simple démarreur, tel qu'un starter, si le besoin de génération électrique n'existe pas.

Sur la figure 2 est illustrée l'évolution, en fonction du temps et de la configuration possible du turbogénérateur, du régime de l'arbre 2 du générateur de gaz 3 en trait plein et du régime de l'arbre 8 de la turbine libre 9 en pointillés. On peut voir que l'évolution du régime des deux arbres est indépendante. Le point correspondant à l'instant de sortie de la phase de démarrage est indiqué également.

Pour un turbomoteur, avec une turbine libre et un système de démarrage classique utilisant une machine électrique réversible, le prélèvement mécanique sur l'arbre du générateur de gaz servant à générer de la puissance électrique par la machine électrique réversible dans un mode de fonctionnement générateur grève les performances du générateur de gaz.

En effet, la variation, au cours du vol, de la puissance mécanique prélevée par la machine électrique 1 et les équipements sur le générateur de gaz se traduit par un déplacement de la ligne de fonctionnement du moteur dans le champ compresseur. Ce déplacement correspond à une marge au pompage qu'il est nécessaire de provisionner, ce qui a pour conséquence :
- de pénaliser l'optimisation de la ligne de fonctionnement du moteur, en interdisant l'utilisation du compresseur à un taux de pression optimal ;
- de dégrader de ce fait les performances stabilisées, avec un impact sur la consommation spécifique.

Avec une telle configuration, une solution pour ne pas prélever de puissance mécanique sur l'arbre du générateur de gaz afin de générer de l'électricité consiste à utiliser une machine électrique pour la fonction de démarrage avec un système de débrayage, et une autre machine électrique solidaire de l'arbre de turbine libre pour la fonction de génération comme illustré sur la figure 1, ce qui est pénalisant en termes de masse et de coût, en plus d'être rarement utilisé en pratique.

Une architecture connue permettant de démarrer un turbogénérateur à turbine libre sans adjonction de démarreur spécifique est divulguée dans le document FR 2 929 324. Cette solution technique permet de réduire la masse totale et le coût et d'augmenter la fiabilité du turbogénérateur par rapport à une turbomachine comprenant deux machines électriques comme sur la figure 1. La solution technique décrite dans ce document consiste en un système de commutation utilisant deux roues libres permettant de démarrer le générateur de gaz d'un turbomoteur à turbine libre, puis de générer l'énergie électrique non propulsive en prélevant l'énergie mécanique sur l'arbre de turbine libre. Les équipements restent entraînés via le générateur de gaz et la boîte d'accessoires.

Cette solution permet notamment d'améliorer les performances transitoires du générateur de gaz, en évitant les inconvénients d'un prélèvement d'énergie cinétique sur le générateur de gaz, et notamment le problème du déplacement de la ligne de fonctionnement du moteur dans le champ compresseur du fait de la variation, au cours du vol, de la puissance mécanique prélevée par la machine électrique.

Cette architecture avec deux roues libres est avantageuse dans le cadre d'une turbomachine d'hélicoptère afin de ne pas entraîner le rotor principal via la machine électrique pendant la phase de démarrage. En effet la turbine libre de la turbomachine étant mécaniquement raccordée au rotor principal, un couplage entre l'arbre de la turbine libre et le rotor principal qui ne pourrait pas être découplé pendant la phase de démarrage nécessiterait de sur-dimensionner la machine électrique et le système de stockage d'énergie afin de tout entraîner en rotation.

Toutefois un tel système reste relativement lourd, cher et complexe. Il n'est pas adapté au cas d'un turbogénérateur à turbine libre pour aéronef à voilure tournante entraînée électriquement, dans lequel l'arbre de la turbine libre est dédié exclusivement ou essentiellement à la fourniture d'énergie électrique par l'intermédiaire de la machine électrique qui prélève la puissance mécanique de l'arbre. En particulier, ce système antérieur n'est pas adapté au cas où l'arbre de la turbine libre n'est pas couplé à un mécanisme de relativement grande inertie comme par exemple un rotor de la voilure tournante de l'aéronef. Autrement dit, un tel système est trop lourd et complexe pour un turbogénérateur à turbine libre dans lequel l'inertie de la ligne d'arbre de turbine libre est généralement faible.

Il est aussi connu du document FR 3 019 222 une turbomachine selon le préambule de la revendication 1.

### Exposé de l'invention

A cet effet, la présente invention propose une turbomachine à turbine libre entraînant une ou plusieurs machines électriques de puissance suffisante dotée d'un système de couplage simplifié permettant d'optimiser la masse, le coût et la fiabilité. L'énergie utile produite par la turbomachine devient uniquement électrique et donc la turbine libre n'est liée mécaniquement qu'à /aux machine(s) électrique.

Dans un objet de l'invention, il est proposé une turbomachine, comportant un générateur de gaz doté d'un premier arbre mécanique, au moins une machine électrique réversible, et une turbine libre dotée d'un second arbre mécanique et entraînée en rotation par un flux de gaz généré par le générateur de gaz.

Selon une caractéristique technique de l'invention, ledit second arbre mécanique est directement raccordé mécaniquement à ladite au moins une machine électrique durant toutes les phases de fonctionnement de la turbomachine, et la turbomachine comprend en outre un unique moyen de couplage mécanique configuré pour mécaniquement coupler le premier arbre mécanique au second arbre mécanique dans une première configuration et découpler mécaniquement le premier arbre mécanique du second arbre mécanique dans une seconde configuration. La machine électrique est dimensionnée pour entraîner à la fois le générateur de gaz et la turbine libre lors du démarrage de la turbomachine.

L'architecture de la turbomachine selon l'invention permet ainsi de n'avoir qu'un unique moyen de couplage mécanique, tel qu'une roue libre, ce qui permet de simplifier le système de commutation et notamment, par rapport aux solutions connues, de réduire la masse et le coût tout en augmentant la fiabilité du système de commutation.

Sur une application de la turbomachine de type turbogénérateur, par exemple pour un aéronef à voilure tournante entraînée électriquement, la ou les machine(s) électrique(s) sont dimensionnées pour générer des niveaux de puissance électrique élevés (pour de l'énergie propulsive), et peuvent facilement délivrer un couple important nécessaire pour entraîner le générateur de gaz et la turbine libre pendant la phase de de démarrage. En effet, sur de telles applications, l'inertie de la ligne d'arbre de turbine libre est relativement faible car non couplée à un mécanisme de relativement grande inertie tel qu'un rotor principal d'hélicoptère par exemple. La faible inertie de cette ligne d'arbre peut alors correspondre essentiellement à la chaîne de puissance avec les rotors des machines électriques. Ou encore, l'arbre de turbine libre peut être couplé à un mécanisme de relativement faible inertie, comme par exemple un rotor parmi un ensemble multi-rotors d'une voilure tournante de l'aéronef, alors que l'ensemble de la voilure comprend en outre au moins un rotor entraîné électriquement par au moins un générateur électrique du turbogénérateur.

De manière générale, une application de la turbomachine selon l'invention de type turbogénérateur n'empêche pas que la turbine libre fournisse de l'énergie mécanique en parallèle de l'énergie électrique, du moment que cette énergie mécanique reste relativement modeste par rapport à l'énergie électrique générée.

Selon un premier aspect de la turbomachine, la turbomachine comprend en outre de préférence une unité de commande de la machine électrique configurée pour placer la machine électrique en mode moteur lors du démarrage de la turbomachine, et placer la machine électrique en mode générateur lorsque le générateur de gaz devient autonome.

De préférence, l'unité de commande peut être configurée pour détecter que le générateur de gaz est autonome lorsque le régime du premier arbre mécanique dépasse un seuil de vitesse de sortie de phase de démarrage
Selon un deuxième aspect de la turbomachine, le moyen de couplage mécanique peut comprendre une roue libre configurée pour que le premier arbre mécanique, lorsqu'il est découplé mécaniquement du second arbre mécanique, tourne à une vitesse supérieure à la vitesse de rotation du second arbre mécanique.

La roue libre permet de pouvoir transmettre uniquement dans un sens la puissance entre les deux arbres. Le générateur de gaz ne pourra en aucun cas entraîner la turbine libre.

Selon un troisième aspect de la turbomachine, la turbomachine peut également comprendre au moins un pignon intermédiaire présentant un rapport de transmission différent du nombre un, ledit au moins un pignon intermédiaire étant monté entre la roue libre et le second arbre mécanique et/ou entre la roue libre et le premier arbre mécanique.

Cela permet d'adapter la vitesse de rotation aux bornes de la roue libre et de connecter deux arbres qui ne tournent pas forcement à la même vitesse de rotation.

Le rapport de transmission est déterminé par des considérations technologiques ou par des besoins de prise de puissance pour entraîner des accessoires par exemple. Mais aussi pour s'assurer, hors phase de démarrage, que la vitesse en entrée de la roue libre, c'est-à-dire sur la borne mécanique de la roue libre couplée au second arbre mécanique, soit toujours inférieure à la vitesse de sortie de la roue libre, c'est-à-dire sur la borne mécanique de la roue libre couplée au premier arbre mécanique. Et ce sur toute la plage de fonctionnement nominal du générateur de gaz et de la turbine libre, hors phase de démarrage donc. Le but étant de s'assurer que la puissance de la turbine libre ne pourra pas être transférée vers le générateur de gaz ce qui créerait un moteur à turbine liée.

Le ou les pignons intermédiaires permettent de modifier le rapport de transmission en prenant en compte le signe du rapport, c'est-à-dire en offrant la possibilité d'assurer une contrarotativité des deux arbres, tout en assurant l'intégration de fonctions secondaires.

Dans un mode de réalisation, l'unité de commande peut être configurée pour détecter que le générateur de gaz est autonome lorsque le couple exercé par l'arbre de la turbine libre sur la sortie de la roue libre dépasse un seuil de couple.

Dans un autre mode de réalisation, l'unité de commande peut être configurée pour détecter que le générateur de gaz est autonome lorsque l'entrée et la sortie de la roue libre se mettent à tourner à des vitesses différentes.

Selon un troisième aspect de la turbomachine, la turbomachine peut également comprendre une boîte d'accessoires à laquelle des équipements sont couplés mécaniquement.

Les pignons de la boite d'accessoires permettent ainsi d'adapter les vitesses pour les accessoires, tels qu'une pompe à carburant ou une pompe à huile, mécaniquement couplés au premier arbre mécanique, c'est-à-dire au générateur de gaz.

Selon un quatrième aspect de la turbomachine, dans le cas où la turbomachine à turbine libre n'utilise qu'une seule machine électrique, la machine électrique peut être entraînée directement par l'arbre mécanique de la turbine libre, et de préférence sans pignon de puissance intermédiaire.

De préférence, la machine électrique peut posséder une vitesse nominale de rotation égale ou proche de celle de la turbine libre.

Cette configuration permet d'améliorer l'efficacité des ventilations après arrêt moteur, les deux arbres étant entraînés simultanément.

### Brève description des dessins

[Fig. 1] La figure 1, déjà décrite, est une vue schématique simplifiée d'une turbomachine à turbine libre selon l'état de la technique.
[Fig. 2] La figure 2, déjà décrite, est une représentation graphique de l'évolution, en fonction du temps et de la configuration possible du turbogénérateur, du régime de l'arbre du générateur de gaz et du régime de l'arbre de la turbine libre de la turbomachine de la figure 1.
[Fig. 3] La figure 3 est un schéma d'une turbomachine à turbine libre selon un mode de réalisation de l'invention.
[Fig. 4] La figure 4 est une représentation schématique des couplages mécaniques entre la machine électrique, le générateur de gaz et la turbine libre de la turbomachine de la figure 3.
[Fig. 5] La figure 5 est une représentation graphique de l'évolution, en fonction du temps et de la configuration possible du turbogénérateur, du régime de l'arbre du générateur de gaz et du régime de l'arbre de la turbine libre de la turbomachine de la figure 3.

### Description des modes de réalisation

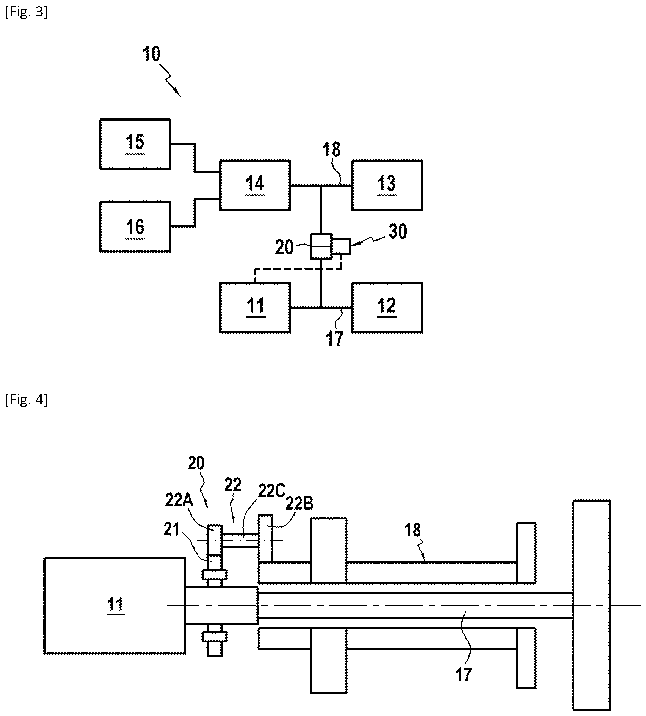

Sur la figure 3 est présentée schématiquement une turbomachine 10 à turbine libre selon un mode de réalisation de l'invention.

La turbomachine 10 comprend une machine électrique 11, une turbine libre 12, un générateur de gaz 13, une boîte d'accessoires 14 et une pompe à carburant 15 et une pompe à huile 16.

La turbine libre 12 comprend un arbre 17 mécaniquement raccordé à la machine électrique 11 en permanence, c'est-à-dire pendant toutes les phases de fonctionnement de la turbomachine 10, notamment la phase de démarrage et la phase de génération électrique. Ce raccordement mécanique entre la machine électrique 11 et l'arbre 17 peut s'effectuer directement de telle façon que l'arbre 17 et le rotor de la machine électrique 11 tournent à la même vitesse. Il peut aussi s'effectuer indirectement par l'intermédiaire d'un réducteur de façon à obtenir des vitesses de rotation différentes entre les deux organes, en particulier dans le cas où les vitesses de rotation nominales des deux organes sont prévues différentes.

La boîte d'accessoires 14 comprend une pluralité de coupleurs mécaniques de sortie, un premier coupleur mécanique de sortie étant mécaniquement raccordé et couplé à la pompe à carburant 15 et un second coupleur mécanique de sortie étant mécaniquement couplé et raccordé à la pompe à huile 16. Dans d'autres modes de réalisation d'autres accessoires peuvent être mécaniquement couplés à d'autres coupleurs mécaniques de sortie de la boîte d'accessoires 14.

Le générateur de gaz 13 comprend un arbre 18 raccordé et couplé mécaniquement à la boîte d'accessoires 14 en permanence.

La turbomachine 10 comprend en outre un unique moyen 20 de couplage mécanique configuré pour mécaniquement coupler l'arbre 18 du générateur de gaz 13 à l'arbre 17 de la turbine libre 12 dans une première configuration et découpler mécaniquement les deux arbres 17 et 18 dans une seconde configuration.

Comme illustré sur la figure 4, une réalisation possible du moyen 20 de couplage mécanique comprend une roue libre 21 et un pignon intermédiaire 22 monté entre la roue libre 21 et l'arbre 18 du générateur de gaz 13. La roue libre 21 correspond à l'élément mécanique du moyen 20 de couplage mécanique permettant d'accoupler ou non l'arbre 17 de la turbine libre 12 à l'arbre 18 du générateur de gaz 13. Le pignon intermédiaire 22 comprend deux roues 22A et 22B de diamètres différents, montées solidaires d'un même axe de pignon 22C, pour avoir un rapport de transmission différent de 1 et ainsi avoir une vitesse de rotation de l'arbre 17 de la turbine libre 12 différente de la vitesse de rotation de l'arbre 18 du générateur de gaz 13.

Dans une variante où la turbomachine est conçue en ayant l'arbre 17 de la turbine libre 12 contrarotatif par rapport à l'arbre 18 du générateur de gaz 13, le moyen de couplage mécanique 20 comprendrait en outre un étage de transmission (tel qu'un pignon supplémentaire) entre la roue libre 21 et le pignon intermédiaire 22.

Comme cela est illustré sur la figure 3, la turbomachine 10 comprend en outre une unité de commande 30 de la machine électrique 11 configurée pour placer la machine électrique 11 dans un mode moteur lors d'une phase de démarrage de la turbomachine 10 et placer la machine électrique 11 dans un mode générateur lorsque le générateur de gaz 13 devient autonome et n'a donc plus besoin d'être entrainé par la machine électrique 11. La détection de l'autonomie du générateur de gaz par l'unité de commande 30 peut se faire en détectant l'instant où le régime de l'arbre 18 du générateur de gaz 13 dépasse un seuil de vitesse dit de sortie de phase de démarrage. En alternative, si le moyen 20 de couplage mécanique comprend une roue libre, cette détection par l'unité de commande 30 peut s'effectuer en mesurant le couple exercé par l'arbre 17 de la turbine libre sur la sortie de la roue libre reliée mécaniquement à l'arbre 18 du générateur de gaz 13. Si ce couple s'annule ou devient inférieur à un seuil proche de zéro, cela signifie que la machine électrique 11 n'entraîne plus le générateur de gaz 13 : celui-ci est devenu autonome. Comme autre alternative, cette détection par l'unité de commande 30 peut s'effectuer en détectant l'instant où l'entrée et la sortie de la roue libre se mettent à tourner à des vitesses différentes. En effet, lorsque le générateur de gaz 13 devient autonome, la sortie de la roue libre ne tourne plus à la même vitesse que l'entrée : elle se met à tourner plus vite.

Le moyen de couplage 20 est configuré mécaniquement pour coupler mécaniquement la machine électrique 11 à la turbine libre 12 et au générateur de gaz 13 via les arbres 17 et 18 lors du démarrage de la turbomachine 10. En effet la vitesse de rotation en sortie de la roue libre 21 (image de la vitesse de rotation de l'arbre 18) étant nulle ou égale à la vitesse d'entrée de la roue libre 21 (image de la vitesse de rotation de l'arbre 17), celle-ci est connectée, c'est-à-dire engagée mécaniquement, et permet le transfert de couple entre l'arbre 17 et l'arbre 18.

En outre, le moyen de couplage 20 est configuré mécaniquement pour déconnecter les deux arbres 17 et 18 lorsque le générateur de gaz 13 devient autonome et atteint le seuil de vitesse de sortie de phase de démarrage (la machine électrique n'est plus activée comme moteur). En effet, la machine électrique 11 n'étant plus en mode « moteur », elle sera entraînée par la turbine libre 12 ce qui engendrera un différentiel de vitesse aux bornes de la roue libre 21 amenant à sa déconnection, c'est-à-dire à son désengagement mécanique. Ainsi, la machine électrique 11 peut fonctionner en générateur électrique et produire de l'énergie électrique à partir de la rotation de l'arbre 17 de la turbine libre 12 entraîné par le mouvement rotatif de la turbine libre 12 elle-même entraînée par le flux gazeux délivré par le générateur de gaz 13.

En alternative à une conception correspondant au schéma de la figure 3, il est possible de prévoir un arrangement dans lequel la borne mécanique de sortie de la roue libre est couplée au premier arbre mécanique (l'arbre 18 du générateur de gaz) par l'intermédiaire de la boîte d'accessoires 14. Ainsi, il est possible de coupler directement cette borne mécanique de sortie à un pignon d'un train d'engrenages de la boite d'accessoires, l'arbre du générateur de gaz étant directement couplé à un autre pignon du même train d'engrenages, de telle sorte que le rapport de transmission entre la sortie de la roue libre et l'arbre du générateur de gaz peut être différent du nombre un.

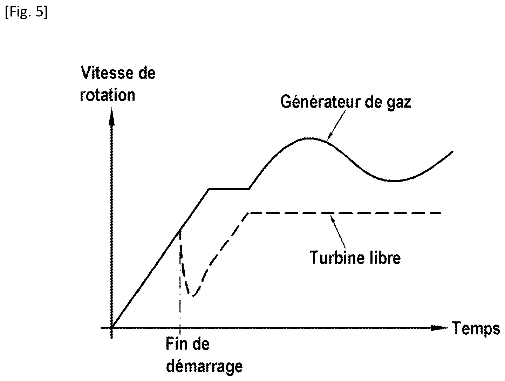

Sur la figure 5 est représentée graphiquement l'évolution, en fonction du temps et de la configuration possible du turbogénérateur, du régime de l'arbre 18 du générateur de gaz 13 en trait plein et, en pointillés, du régime de l'arbre 17 de la turbine libre 12 de la turbomachine 10 de la figure 3.

En comparant le graphique de la figure 2 et celui de la figure 5, on voit que l'architecture de la turbomachine 10 selon l'invention permet une montée simultanée en régime du générateur de gaz 13 et de la turbine libre 12 jusqu'à l'atteinte du seuil de sortie de la phase de démarrage. La vitesse de rotation de la machine électrique 11 après la phase de démarrage peut réduire transitoirement, le temps que la puissance disponible au niveau de la turbine libre puisse être suffisante pour entraîner l'ensemble (turbine libre et machine électrique) à vitesse constante
La turbomachine à turbine libre selon la présente invention permet ainsi d'optimiser la masse, le coût et la fiabilité du système de commutation et donc de la turbomachine.

## Revendications

1. Turbomachine (10) de type turbogénérateur à turbine libre, notamment pour un aéronef à voilure tournante entraînée électriquement ou pour les besoins en alimentation électrique d'un avion, comportant un générateur de gaz (13) doté d'un premier arbre mécanique (18), au moins une machine électrique réversible (11), et une turbine libre (12) munie d'un second arbre mécanique (17) et entraînée en rotation par un flux de gaz généré par le générateur de gaz (13),
**caractérisée en ce que** ledit second arbre mécanique (17) est raccordé mécaniquement à ladite au moins une machine électrique (11) durant toutes les phases de fonctionnement de la turbomachine (10), et
la turbomachine (10) comprend en outre un unique moyen (20) de couplage mécanique configuré pour coupler mécaniquement ledit premier arbre mécanique (18) audit second arbre mécanique (17) lorsque la machine électrique (11) fonctionne en mode moteur et découpler mécaniquement ledit premier arbre mécanique (18) dudit second arbre mécanique (17) lorsque la machine électrique (11) fonctionne en mode générateur, la machine électrique (11) étant dimensionnée pour entraîner le générateur de gaz (13) et la turbine libre (12) lors du démarrage de la turbomachine (10).

2. Turbomachine (10) selon la revendication 1, comprenant en outre une unité de commande (30) de la machine électrique (11), l'unité de commande (30) étant configurée pour placer la machine électrique (11) en mode moteur lors du démarrage de la turbomachine (10), et placer la machine électrique (11) en mode générateur lorsque le générateur de gaz (13) devient autonome.

3. Turbomachine selon la revendication 2, dans laquelle l'unité de commande (30) est configurée pour détecter que le générateur de gaz (13) est autonome lorsque le régime du premier arbre mécanique (18) dépasse un seuil de vitesse de sortie de phase de démarrage.

4. Turbomachine (10) selon l'une des revendications 1 à 3, dans laquelle le moyen (20) de couplage mécanique comprend une roue libre (21) configurée pour que le premier arbre mécanique (18), lorsqu'il est découplé mécaniquement du second arbre mécanique (17), tourne à une vitesse supérieure à la vitesse de rotation du second arbre mécanique (17).

5. Turbomachine (10) selon la revendication 4, comprenant en outre au moins un pignon intermédiaire (22) présentant un rapport de transmission différent du nombre un, ledit au moins pignon intermédiaire (22) étant monté entre la roue libre (21) et le second arbre mécanique (17) et/ou entre la roue libre (21) et le premier arbre mécanique (18).

6. Turbomachine selon la combinaison des revendications 2 et 4 ou la combinaison des revendications 2, 4 et 5, dans laquelle l'unité de commande (30) est configurée pour détecter que le générateur de gaz (13) est autonome lorsque le couple exercé par l'arbre (17) de la turbine libre (12) sur la sortie de la roue libre dépasse un seuil de couple.

7. Turbomachine selon la combinaison des revendications 2 et 4 ou la combinaison des revendications 2, 4 et 5, dans laquelle l'unité de commande (30) est configurée pour détecter que le générateur de gaz (13) est autonome lorsque l'entrée et la sortie de la roue libre (21) se mettent à tourner à des vitesses différentes.

8. Turbomachine (10) selon l'une des revendications 1 à 7, comprenant en outre une boîte d'accessoires (14) couplée mécaniquement au premier arbre mécanique (18) et à laquelle des équipements (15, 16) sont couplés mécaniquement.

9. Turbomachine (10) selon la revendication 8, dans laquelle la turbomachine (10) comporte une seule machine électrique (11), la machine électrique (11) étant entraînée directement par l'arbre mécanique (17) de la turbine libre (12).

10. Turbomachine (10) selon la revendication 9, dans laquelle la machine électrique (11) possède une vitesse nominale de rotation égale à ou proche de celle de la turbine libre (12).

## Patentansprüche

1. Turbomaschine (1) vom Turbogeneratortyp mit Freilaufturbine, insbesondere für ein Luftfahrzeug mit Drehflügel, der elektrisch oder zu Zwecken der elektrischen Versorgung eines Flugzeugs angetrieben wird, wobei die Turbomaschine einen Gasgenerator (13) beinhaltet, der mit einer ersten mechanischen Welle (18), mindestens einer reversiblen elektrischen Maschine (11) und einer Freilaufturbine (12) ausgestattet ist, die mit einer zweiten mechanischen Welle (17) versehen und von einem Gasstrom drehbar angetrieben wird, der von dem Gasgenerator (13) erzeugt wird,
**dadurch gekennzeichnet, dass** die zweite mechanische Welle (17) mechanisch an die mindestens eine elektrische Maschine (11) während allen Betriebsphasen der Turbomaschine (10) angeschlossen ist, und
die Turbomaschine (10) ferner ein einziges mechanisches Kopplungsmittel (20) umfasst, das dazu ausgestaltet ist, die erste mechanische Welle (18) mit der zweiten mechanischen Welle (17) mechanisch zu koppeln, wenn die elektrische Maschine (11) in dem Motormodus arbeitet, und die erste mechanische Welle (18) von der zweiten mechanischen Welle (17) mechanisch zu entkoppeln, wenn die elektrische Maschine (11) in dem Generatormodus arbeitet, wobei die elektrische Maschine (11) so bemessen ist, dass sie den Gasgenerator (13) und die Freilaufturbine (12) beim Start der Turbomaschine (10) antreibt.

2. Turbomaschine (10) nach Anspruch 1, ferner umfassend eine Steuereinheit (30) der elektrischen Maschine (11), wobei die Steuereinheit (30) dazu ausgestaltet ist, die elektrische Maschine (11) beim Start der Turbomaschine (10) in den Motormodus zu setzen und die elektrische Maschine (11) in den Generatormodus zu setzen, wenn der Gasgenerator (13) autonom wird.

3. Turbomaschine nach Anspruch 2, wobei die Steuereinheit (30) dazu ausgestaltet ist, zu erfassen, dass der Gasgenerator (13) autonom ist, wenn die Drehzahl der ersten mechanischen Welle (18) einen Schwellenwert der Abtriebsdrehzahl der Startphase überschreitet.

4. Turbomaschine (10) nach einem der Ansprüche 1 bis 3, wobei das mechanische Kopplungsmittel (20) ein freies Rad (21) umfasst, das so ausgestaltet ist, dass sich die erste mechanische Welle (18), wenn sie mechanisch von der zweiten mechanischen Welle (17) entkoppelt wird, mit einer Drehzahl dreht, die größer als die Drehzahl der zweiten mechanischen Welle (17) ist.

5. Turbomaschine (10) nach Anspruch 4, ferner umfassend mindestens ein Zwischenzahnrad (22), das ein Übersetzungsverhältnis aufweist, das ungleich der Zahl eins ist, wobei das mindestens eine Zwischenzahnrad (22) zwischen dem freien Rad (21) und der zweiten mechanischen Welle (17) und/oder zwischen dem freien Rad (21) und der ersten mechanischen Welle (18) montiert ist.

6. Turbomaschine nach der Kombination der Ansprüche 2 und 4 oder der Kombination der Ansprüche 2, 4 und 5, wobei die Steuereinheit (30) dazu ausgestaltet ist, zu erfassen, dass der Gasgenerator (13) autonom ist, wenn das Drehmoment, das von der Welle (17) der Freilaufturbine (12) auf den Ausgang des freien Rades ausgeübt wird, einen Drehmoment-Schwellenwert überschreitet.

7. Turbomaschine nach der Kombination der Ansprüche 2 und 4 oder der Kombination der Ansprüche 2, 4 und5, wobei die Steuereinheit (30) dazu ausgestaltet ist, zu erfassen, dass der Gasgenerator (13) autonom ist, wenn der Eingang und der Ausgang des freien Rades (21) sich mit verschiedenen Drehzahlen zu drehen beginnen.

8. Turbomaschine (10) nach einem der Ansprüche 1 bis 7, ferner umfassend ein Anbaugerätegetriebe (14), das mechanisch mit der ersten mechanischen Welle (18) gekoppelt ist und mit welchem Anbaugeräte (15, 16) mechanisch gekoppelt sind.

9. Turbomaschine (10) nach Anspruch 8, wobei die Turbomaschine (10) eine einzige elektrische Maschine (11) beinhaltet, wobei die elektrische Maschine (11) direkt von der mechanischen Welle (17) der Freilaufturbine (12) angetrieben wird.

10. Turbomaschine (10) nach Anspruch 9, wobei die elektrische Maschine (11) eine Nenndrehzahl besitzt, die gleich oder annähernd jener der Freilaufturbine (12) ist.

## Claims

1. A turbomachine (10) of the free turbine turbogenerator type, in particular for an electrically-driven rotary wing aircraft or for the electrical power needs of an aircraft, comprising a gas generator (13) equipped with a first shaft (18), at least one reversible electrical machine (11) and a free turbine (12) provided with a second mechanical shaft (17) and caused to rotate by a gas flow generated by the gas generator (13),
**characterised in that** said second mechanical shaft (17) is mechanically connected to said at least one electrical machine (11) during all phases of operation of the turbomachine (10), and
the turbomachine (10) further comprises a single mechanical coupling means (20) configured to mechanically couple said first mechanical shaft (18) to said second mechanical shaft (17) when the electrical machine (11) is operating in motor mode and mechanically uncoupling said first mechanical shaft (18) from said second mechanical shaft (17) when the electrical machine (11) is operating in generator mode, the electrical machine (11) being sized so as to drive the gas generator (13) and the free turbine (12) during start-up of the turbomachine (10).

2. The turbomachine (10) according to claim 1, further comprising a control unit (30) of the electrical machine (11), the control unit (30) being configured to place the electrical machine (11) in motor mode during start-up of the turbomachine (10), and to place the electrical machine (11) in generator mode when the gas generator (13) becomes autonomous.

3. The turbomachine according to claim 2, in which the control unit (30) is configured to detect that the gas generator (13) is autonomous when the speed of the first mechanical shaft (18) exceeds a start-up phase output-speed threshold.

4. The turbomachine (10) according to one of claims 1 to 3, in which the mechanical coupling means (20) comprises a free wheel (21) configured so that the first mechanical shaft (18), when it is mechanically uncoupled from the second mechanical shaft (17), turns at a speed greater than the speed of rotation of the second mechanical shaft (17).

5. The turbomachine (10) according to claim 4, further comprising at least one intermediate pinion (22) having a gear ratio different from the number one, said at least one intermediate pinion (22) being mounted between the free wheel (21) and second mechanical shaft (17) and/or between the free wheel (21) and the first mechanical shaft (18).

6. The turbomachine according to the combination of claims 2 and 4 or the combination of claims 2, 4 and 5, in which the control unit (30) is configured to detect that the gas generator (13) is autonomous when the torque exerted by the shaft (17) of the free turbine (12) on the output of the free wheel exceeds a torque threshold.

7. The turbomachine according to the combination of claims 2 and 4 or the combination of claims 2, 4 and 5, in which the control unit (30) is configured to detect that the gas generator (13) is autonomous when the input and output of the free wheel (21) start to rotate at different speeds.

8. The turbomachine (10) according to one of claims 1 to 7, further comprising an accessories box (14) mechanically coupled to the first mechanical shaft (18) and to which items of equipment (15, 16) are mechanically coupled.

9. The turbomachine (10) according to claim 8, in which the turbomachine (10) comprises a single electrical machine (11), the electrical machine (11) being driven directly by the mechanical shaft (17) of the free turbine (12).

10. The turbomachine (10) according to claim 9, in which the electrical machine (11) has a nominal speed of rotation equal to or close to that of the free turbine (12).
